# EUROPEAN PATENT APPLICATION

(11) **EP 4 751 565 A1**
(43) Date of publication of application: **03.06.2026**
(21) Application number: 24215853.3
(22) Date of filing: 27.11.2024
(51) Int. Cl.: A01M 23/30, A01M 23/38, A01M 31/00

(54) **A PEST CONTROL DEVICE AND A METHOD FOR USING THE PEST CONTROL DEVICE**

(71) Applicant: Anticimex Innovation Center A/S, 3200 Helsinge (DK)
(72) Inventor: FLAGSTAD, Emil Bonnevie, 3450 Allerød (DK); KISLING-MØLLER, Kristian Binderup, 3660 Stenløse (DK)
(74) Representative: Zacco Denmark A/S

(57) **Abstract**

A pest control device and method for using the same are described. The device comprises: a housing having an entrance for a pest; an inner compartment comprising a side wall extending between a first end and a second end, and a passage for connecting the entrance to the first end of the inner compartment, a motion sensor to sense a motion of the pest within the passage; a presence sensor a to detect presence of the pest within the inner compartment; a killing mechanism; a control circuitry operably connected to the motion sensor, the presence sensor, and the killing mechanism; and configured determine a movement of the pest at a movement time point; determine a presence of the pest within the inner compartment at a presence time point; and actuate the killing mechanism upon the presence time point being within a trigger time range after the movement time point.

## Description

### Technical field

The present disclosure relates to a pest control device and a method for using the pest control device. More specifically, the disclosure relates to a pest control device and a method for using the pest control device as defined in the introductory parts of the independent claims.

### Background art

In most cities and in agricultural areas over the world the presence of pests such as rodents, in particular rats, is a problem. Even though pest control has developed immensely during the last decades, severe damages are still today caused by rodents. The damages are not only direct damages, e.g. food or crops being eaten by rodents, but also indirect damages such as pest inflicted sanitary problems for households or business and the spreading diseases. Having reliable and efficient pest control is therefore important from a wide range of aspects.

New and improved methods for pest control are consequently being developed, a great deal of which is based on pesticides, while other methods use traps with or without baits for capturing or killing the pests. To achieve the killing of the pest mechanical and/or electric means are being developed which are designed to ensure efficient pest control while mitigating unnecessary suffering for the pests.

During the last few years, digitally connected pest control devices have become increasingly popular. For instance, the SMART solutions developed and marketed by Anticimex^{™} is one example well-known in the industry of pest control. By having pest control devices and sensors for monitoring that are connected to the Internet, improved monitoring of pest is made possible. This has the advantage that the need for manually checking the pest control devices is reduced. The workload for an operator monitoring or operating the pest control devices may thereby be reduced. To this end, interconnected pest control devices may allow for a more accurate and robust pest control.

Although pest control devices are improving, there is still a need for further development. By way of example, there is a continual need for pest control devices that are safer to use by an operator. There is also a need for pest control devices that can more efficiently lure the pest into the device and to terminate the trapped pests. There is, moreover, a need to reduce the number of false positives, i.e. situations where a pest control device mistakenly detects or triggers an event when no actual pest is present. These false alerts can lead to inefficient time usage, unnecessary transportation, and reducing the overall effectiveness of pest control strategies.

To this end, WO 2021/160819 and EP3613286A1 relate to improved pest control devices. These devices allow for simplified use and more reliable actuation of the kill mechanism for killing pest being trapped. In more detail, WO 2021/160819 discloses a rodent trap comprising a housing, an inner channel, a spring-loaded killing mechanism comprising at least one spring and at least one striker plate, a reloader, a trigger mechanism, and a bait. The housing comprises an opening into the inner channel and one or more sensors arranged at/in the inner channel and/or the opening for triggering the trigger mechanism if a rodent is detected. The striker plate is configured to move between two positions by means of the spring, a first position in which at least a part of the striker plate is arranged at a first side of the inner channel and/or opening leaving the inner channel and/or opening open for passage.

This provides a spring-loaded strike rat trap having a more efficiently used inner space as the striker plate requires less space for its movement. Hence, a more user-friendly design of the spring-loaded strike rat trap in terms of accessibility is provided. This provides easier and more secure arming of the spring-loaded strike rat trap with less risk of injury in case of a "misfire" or accidental triggering while arming and/or having any body member, such as one or more fingers in contact with parts moving when the trap is triggered providing a more robust functionality and improved user safety.

EP3613286A1 discloses a trap for animals, in particular rats or mice, and for being arranged on a substantially horizontal face, where this meets a substantially vertical face. The trap comprising: a first flange and a second flange that are connected substantially at right angles to the effect that the trap can be arranged in two positions, where the substantially horizontal face meets the substantially vertical face. An advantage being that the trap forms a passage of the flanges, base and wall of the trap when it is arranged e.g. on a floor and up against a wall. By configuring the housing with inner passageway extending from the one flange, it is accomplished that the animals come across that passageway when they seek shelter in the passage, and since they feel secure in such place they will often explore the inner passage which is fitted with a killer mechanism and a trigger mechanism that kill the animals that move into the inner passageway. EP3613286A1 further discloses that the inner passageway may comprise at least two trigger mechanisms that are arranged to each their side of the killer mechanism, which trigger mechanisms are both to be activated before the killer mechanism is triggered. By configuring the trap with two trigger mechanisms at a suitable distance from each other and which are both to be activated before the trap's killer mechanism is released false positive triggering events by which the killer mechanism is releases can be reduced. An improved reliability is further obtained.

Alternative solutions to provide a reliable and robust triggering mechanism are, moreover, disclosed. The kill mechanism may, for example, be activated by using a plurality of triggering mechanisms and the trigger mechanism may comprise sensors that are triggered by the radiation of heat from an animal. By way of example, the trap may comprise two light sensors and two light emitters, wherein the light beams of the two light emitters hit the two light sensors, and the killer mechanism of the trap is, moreover, configured such that it is released when the two light sensors do not register light at the same time. By configuring the trap in this way, a very high degree of security is ensured, since both of the two light beams are to be interrupted in order for the killer mechanism of the trap to be activated.

To this end, the combination of sensors or detector as described above which are being activated at the same time, i.e. the trap may be configured such that it activates the kill mechanism, such as a blade, only when two or more trigger mechanisms are activated. Thereby a high degree of security is ensured since an animal activating both trigger mechanisms must necessarily have one body part to each side of the hit range of the blade.

There is, however a need to further increase the accuracy and reliability of detection of pests by pest control devices. There is in particular a need to further reduce the occurrence of false actuation of the killing mechanism while still allowing for an efficient killing of the pests so that suffering for the pests is alleviated.

### Summary

It is an object of the present disclosure to mitigate, alleviate or eliminate one or more of the above-identified deficiencies and disadvantages in the prior art and solve at least the above-mentioned problem.

According to a first aspect there is provided a pest control device comprising:
a housing arranged to be placed on the ground and lean against an external structure; the housing comprising:
an entrance for a pest;
an inner compartment comprising a side wall or side walls extending between a first end and a second end, wherein the first end is an opening; and a passage for connecting the entrance to the first end of the inner compartment;
an attracting arrangement arranged to attract the pest to the inner compartment;
a motion sensor arranged so as to sense a motion of the pest within the passage;
a presence sensor arranged at an inner surface of the inner compartment, the presence sensor being arranged to detect presence of the pest within the inner compartment;
a killing mechanism arranged within the inner compartment between the first end and the presence sensor;
a control circuitry operably connected to the motion sensor, the presence sensor, and the killing mechanism;
wherein the control circuitry is configured to cause the pest control device to:
   determine using the motion sensor a movement of the pest within the passage at a movement time point;
   determine using the presence sensor a presence of the pest within the inner compartment at a presence time point; and
   actuate the killing mechanism upon the presence time point being within a trigger time range after the movement time point.

An advantage may be that that a more accurate actuation of the killing mechanism is obtained. A further advantage may be that the risk of a false positive actuation of the killing mechanism is reduced. Put differently, the risk of one or more other objects, such as one or more insects or snails being present in the housing, may actuate the killing mechanism.

In more detail, these advantages are achieved by using two separate detection events pertaining to the motion sensor and the presence sensor, respectively, at which the pest is detected and to only actuate the killing mechanism upon the two detection events occurring within the trigger range. To this end, the conditioning that the presence time point being within a trigger time range after the movement time point allows for filtering out a premature actuation of the killing mechanism. The use of two different sensors, i.e. the motion sensor and the presence sensor, may further increase the reliability with which the killing mechanism is actuated.

The pest control device may be configured to monitor and trap pests, e.g. a mammal species, such as rats. The pest control device may in other examples be arranged to monitor or trap mice, ferrets, minks, moles or other rodents.

The passage may have one or more entrances to the passage. An advantage having two or more passages, e.g. a first and a second entrance to the passage, is that the threshold for a pest to pass through the passage may be reduced. According to some examples, the pest may able to see between the two entrances. The two entrances may be opposite each other.

The housing may, moreover, be arranged to be placed on the ground and lean against an external structure. To this end, the housing may be arranged up against a wall or the like. The external wall and an inner portion of the housing may thereby form the passage that pest such as a rodent can move into and/or hide within.

The inner compartment may form an elongated chamber. The inner compartment may be elongated along a longitudinal axis. The inner compartment may extend between the first end and a second end along the longitudinal axis. The first end and the second end may be opposite ends of the inner compartment.

The location of the attracting arrangement within the housing, may, moreover, be selected such that the pest is lured into the inner compartment. The attracting arrangement may be arranged at the second end of the inner compartment, the second end being opposite to the first end.

The side wall or side walls of the inner compartment may be understood to surround the inner compartment. The inner compartment may have one side wall. The side wall may be understood as an inner wall. The inner wall may form a cylindrical surface. The cylindrical surface may be understood to border the inner compartment.

The inner compartment may have an inner surface formed by the inner wall.

The inner compartment may have a plurality of side walls. The side walls may form one or more inner surfaces. The one or more inner surfaces may face the inner space formed by the side walls.

The killing mechanism may be arranged to be in an open or a closed state. The killing mechanism may extend through one or more walls of the inner compartment. The killing mechanism may in the open state allow for passage for a pest through the inner compartment. The killing mechanism may in the closed state be arranged to physically strike the body of the pest.

The killing mechanism is to be understood as being arranged to kill a pest being within the inner compartment. The killing mechanism may kill the pest by a transition from the open state to the closed state.

The killing mechanism may be a mechanical and/or electrical device arranged to kill the pest.

The killing mechanism may comprise a spring-loaded blade or knife that snaps shut when the killing mechanism is actuated. An advantage being that they are easy to set up and can be reused. The killing mechanism may comprise a protruding element such as a pole, pillar, or spike arranged to hit the pest when the killing mechanism is activated.

The killing mechanism may comprise an electrical device configured to deliver a high-voltage shock to kill the pest. An advantage being that they are quick, humane, and simpler to reload.

The killing mechanism may comprise cooperating mechanical and electrical parts.

The killing mechanism may be arranged to strike the pest in a direction perpendicular to the elongation of inner compartment. Put differently, the killing mechanism may be arranged to extend in a transversal direction, the transversal direction being along a transversal axis which is perpendicular to the longitudinal axis.

The attracting element may be in the form of or comprising a bait. The attracting element may be in the form of a compartment such as a box or drawer comprising a lure. The lure should be understood as a substance or substances, configured to attract the pest into the housing.

The lure may be a pheromone lure. By way of example, the lure may be in the form of or comprising one or more synthetic chemicals that mimic pheromones of pest. The lure may be a food-based lures such as food or food-like substances to attract pests.

The lure may alternative be a device emitting visual and/or audio signals to attract the pest.

According to some examples, the trigger time range may be 5 seconds to 120 seconds.

According to some examples, the trigger time range may be between 10 seconds to 80seconds. More preferably, the trigger time range may be between 20 seconds to 40 seconds.

According to some examples, the trigger time range may be larger than 10 seconds.

An advantage may be that the trigger time range is set such that objects that move too fast or too slow through the housing may not actuate the killing mechanism. False positives may thereby be mitigated. By way of example, an insect entering into the pest control device may, by use of the trigger time range, be prevented from actuating the killing mechanism. Put differently, a faster moving insect such as a fly, wasp or a spider may, for example, move too fast between the two sensors to trigger an actuation of the killing mechanism. To this end, a slower moving insect such as a snail or a worm may move too slowly between the two sensors to cause an actuation. Hence, a false positive actuation of the killing mechanism may be mitigated. The selectivity of the pest control device may be improved.

According to some examples, the control circuitry is configured to update the movement time point in response to a subsequent movement being determined.

An advantage may be that a pest moving in the passage that does not enter the inner compartment may be ignored. By way of example, a pest moving through or entering into the passage but turning back out again can be filtered out. Hence a more robust actuation of the killing mechanism may be obtained.

The updated movement point of time may occur after a pre-set time point. The updating of the movement time point may be conditioned such that an update occurs only if the presence sensor has not detected a presence of a pest after a time period being larger than the trigger time range.

Put differently, the control circuitry may be configured such that the update occurs only if the presence sensor has not detected a presence of a pest within a reset time threshold, the reset time threshold being larger in time than the trigger time range. By way of example, the reset time threshold may be 20-200 percent larger than the trigger time range.

The reset time threshold may, by way of example, be 60 seconds if the trigger time range is between 20 - 40 seconds.

The control circuitry may be configured such that the movement point of time is reset after a predetermined time. The predetermined time may, by way of example, be within the range 10 seconds to 60 seconds larger than the set trigger time range.

According to some examples, the motion sensor is a Passive Infrared sensor, PIR, sensor.

An advantage may be that a reliable motion sensor is provided. A cost effective and robust motion detection may further be provided. The PIR sensor, moreover, efficiently detects detection of movement and filters out stationary objects. Hence, objects such a vegetation, dirt, dust etc that may be present in the passage may efficiently be disregarded. As a further example, an already killed pest, i.e. being motion less, may thereby not lead to a further actuation of the killing mechanism. This may be advantageous, for example, of automatic pest control device where the killer mechanism is reloaded after being actuated.

A further advantage may be that the PIR sensor allows for lower cost, and greater reliability in detecting motion. There is also no need for a direct contact with the moving object.

By way of example, the PIR sensor may be designed to detect changes in the amount of thermal radiation within a present IR radiation range. When a warm object, such as a pest, moves within the field of view of the PIR sensor, a relative change in IR intensity between two sensor elements may be detected as a motion. The PIR sensor may, for example, has two slots made of a material that is sensitive to IR radiation. When one slot detects a change before the other, it triggers the sensor's output pertaining to a movement. The PIR sensor may comprise a lens structure to define the field of view of the motion sensor.

The PIR sensor may, moreover, be set to detect thermal radiation above or within a thermal range.

The control circuitry and/or PIR sensor may be configured to cause the pest control device to determine a movement of the pest within the passage upon the thermal radiation being above a predetermined thermal radiation intensity threshold. By way of example, smaller animals and/or colder animals that are not desired to detect may thereby filtered out.

The control circuitry may be understood as circuitry configured to determine and/or monitor parameters pertaining to a state or a function of a device or a system of devices. The control circuitry may form part of a control unit. The control circuitry may be configured to regulate and/or control a state and/or a function of a device or a system of devices. The control circuitry may form part of a control system. The control system may comprise one or more control units. The wording control unit may be understood as a unit configured to handle control signals, such as processor control signals. The control unit may comprise circuitry for executing computer instructions. The control unit may further direct and/or determine input and output parameters, receive and/or send instructions to run computer code. The control unit may also be configured to monitor or direct other units and/or devices by control and timing signals.

According to some examples, the presence sensor comprises a light source and a light detector, wherein light from the light source forms a light path extending across an inner space of the inner compartment formed by the side wall or side walls, and wherein the light detector is arranged to detect light emitted by the light source.

The light may be within the infra-red, IR, range of the electromagnetic spectrum.

An advantage may be that light-based infrared, IR, sensors and/or detectors have lower power consumption, stronger noise immunity, and ability to detect objects without physical contact. The IR sensors and/or IR detectors may, moreover, perform reliably in both light and dark conditions and are durable against rust and corrosion. Additionally, their compact sizes make them easy to integrate into the inner compartment.

A further advantage may be that light-based IR sensors/detectors may show higher spatial resolution, than, for example, a PIR sensor. To this end, the light-based IR sensors/detectors allow for improved design possibilities such as the sensor's/detector's field of view, FOV, the distance to the target, the width of the light beam produced and the size of the IR sensor. The spatial resolution at which a pest is detected may thereby be increased. Put differently, the detection area or detection volume in which the pest has to be physically present in order to trigger a detection event may be reduced. A more accurate detection of pest may thereby be provided. Put differently, an advantage may be that the accuracy at which the control circuitry may cause the pest control device to determine, using the presence sensor, a presence of the pest within the inner compartment be increased.

The location of the pest in relation to the killing mechanism may further be controlled with increased accuracy. A more effective killing of the pest may, moreover, be achieved which alleviates suffering.

According to some examples, the pest control device further comprises a mirror arranged to reflect light from the light source to impinge on the light detector such that a light path extends back and forth across the inner space formed by the side wall or side walls.

Advantage may be that the light path may efficiently be extended within the inner compartment. By way of example, by using one or more mirrors the light path may extend in a plane such that a two-dimensional light beam is generated across the inner compartment, i.e. the beam spanning a portion of a plane being perpendicular to the extension of the inner compartment. Hence the light detector/sensor may be placed at within the inner compartment such that an interruption in the light path, i.e. light beams, can be used to detect the presence of the pest within the inner compartment.

The light may according to some examples be within the visible range.

The light may according to some examples be infra-red.

The light detector may be arranged to detect all or a portion of the light emitted.

According to some examples, the mirror is a mirror removably attached to the pest control device.

An advantage being that the mirror can be easily be removed from the pest control device. The removable mirror may be replaced or cleaned in an efficient manner. By way of examples, traces or remains, such as blood, from a previously killed pest may be removed. An improved reflectance of the mirror may be achieved. Light scattering at the mirror may moreover be reduced. Dirt, dust, and/or water vapour condensed on the mirror surface may moreover be removed efficiently.

According to some examples, the control circuitry is configured to determine the presence of the pest within the inner compartment if the light path extending across an inner space of the inner compartment is blocked for a time period being larger than a threshold detection time.

An advantage may be that the threshold detection time is set such that objects that move too fast pass the light path are disregarded as pests. Put differently, if the light path is blocked for a time being smaller that the threshold detection time a presence of pest is not detected. False positives may thereby be mitigated. By way of example, an insect such as a fly or wasp flying thought the light path is prevented from causing a detection of pest. Put differently, these insects are filtered out efficiently. A false positive actuation of the killing mechanism is further mitigated. A more accurate pest control device may thereby be provided.

The threshold detection time may be within the time range 50 to 800 milliseconds. Preferably, the threshold detection time is within the time period 150 to 650 milliseconds. The threshold detection time may, according to some examples, be 500 milliseconds.

According to some examples, the presence sensor is arranged at a predetermined distance from the killing mechanism, the predetermined distance being based on the anatomy of the pest.

An advantage may be that pest having the right size and/or shape may be targeted. By way of example, the predetermined distance may be set in length to correspond to the anatomy of a rat. Hence smaller animals such as a bird or mouse may not be detected by the presence sensor and hence the killing mechanism may be prevented from being actuated by the bird or mouse.

According to some examples, the presence sensor may be activated upon the motion sensor determining the movement of a pest. Put differently, the presence sensor may be activated at the movement time point. In more detail, the control circuitry may be arranged to activate the presence sensor, e.g. by changing the presence sensor from being in a passive state to being in an active state. The presence sensor may be configured to be operational in the active state such that a presence of the pest within the inner compartment may be determined. The presence sensor may be in a sleep mode when being in the passive state. The presence sensor may be turned on when a being activated. The presence sensor may be turned off in the passive state. Thus, the presence sensor may be powered at the movement time point. A more energy efficient pest control device may be provided.

The presence sensor may be set to the passive state after a predetermined time period, the predetermine time period being larger than the trigger time range.

According to some examples, the light source and the light detector are activated, e.g. turned on, upon the motion sensor determining the movement of a pest.

An advantage being that a more energy efficient pest control device is proved. By way of example, the light source does not have to be turned on unless a pest is determined to be present by the motion sensor.

A more durable pest control device may further be provided.

The pest control device may further comprise a battery, the battery being arranged to power the pest control device. The lifetime of the battery of the pest control device may thereby be extended.

According to some examples, the presence sensor may be configured to perform a test cycle. The control circuit may be arranged to initiate the test cycle. The test cycle may comprise activating the presence sensor for a test time period. The test time period may be between 50 milliseconds to 300 milliseconds. The test time period may according to some examples, be 200 milliseconds. The test cycle may comprise activating the presence sensor and upon the presence sensor generating a detection signal pertaining to a presence generating an alarm signal.

The control circuit may be arranged to initiate the cycle when the presence sensor is activated. In other words, the test cycle is run when the motion sensor has determined a movement of a pest.

An advantage being that a malfunction and/or a blocking of the presence sensor may be determined. An alarm signal may further be sent from the pest control device.

By way of example, the presence sensor may comprise a light source and a light detector. A blocking of the light source and/or the light detector may thereby be efficiently detected outside the trigger time range. False-positive detection events may thereby be mitigated. An actuation of the killing mechanism without a pest being present in the inner chamber may thereby be mitigated.

The test cycle may be initiated at predetermined intervals. The predetermined interval may, by way of example, be performed each hour. According to other examples, the test cycle may be initiated one time per day. The interval at which the test cycle is initiated may be a function of the number of times the movement of a pest is determined.

According to some examples, the motion sensor is arranged on the housing, in the passage, and in a portion of the passage bordering the first end of the inner compartment.

According to some examples, the housing is arranged to lean against an external wall such that the external wall and the housing forms the passage for connecting the entrance to the first end of the inner compartment. Put differently, the housing may be arranged up against a wall or the like.

An advantage may be that the wall and an inner portion of the housing may thereby for the passage that pest such as a rodent or mouse can move into and/or hide within. Hence an efficient geometry is provided for the pest to move towards the inner compartment of the trap. The design of the housing may increase the chances that the pest feels secure within the passage and may further explore the inner parts of the housing such that the inner compartment is reached.

According to some examples, the attraction arrangement is arranged at the second end of inner compartment, the second end being opposite to the first end.

According to a second aspect there is provided a method for using the pest control device according to the first aspectto the first aspect, the method comprising: determining, by the motion sensor at a movement time point, a movement of the pest within the passage; determining, by the presence sensor at a presence time point, a presence of the pest within the inner compartment; and actuating the killing mechanism upon the presence time point being within a trigger time range after the movement time point.

According to some examples, the control circuitry is configured to update the movement time point in response to a subsequent movement being determined by the motion sensor.

According to some examples, the presence of the pest within the inner compartment is determined if the presence of pest is detected for a time period being larger than a threshold detection time.

Effects and features of the second aspect are to a large extent analogous to those described above in connection with the first aspect. Examples mentioned in relation to the first aspect are largely compatible with the the second aspect.

The present disclosure will become apparent from the detailed description given below. The detailed description and specific examples disclose preferred examples of the disclosure by way of illustration only. Those skilled in the art understand from guidance in the detailed description that changes and modifications may be made within the scope of the disclosure.

Hence, it is to be understood that the herein disclosed disclosure is not limited to the particular component parts of the device described or steps of the methods described since such device and method may vary. It is also to be understood that the terminology used herein is for purpose of describing particular examples only, and is not intended to be limiting. It should be noted that, as used in the specification and the appended claim, the articles "a", "an", "the", and "said" are intended to mean that there are one or more of the elements unless the context explicitly dictates otherwise. Thus, for example, reference to "a unit" or "the unit" may include several devices, and the like. Furthermore, the words "comprising", "including", "containing" and similar wordings does not exclude other elements or steps.

### Brief descriptions of the drawings

The above objects, as well as additional objects, features and advantages of the present disclosure, will be more fully appreciated by reference to the following illustrative and non-limiting detailed description of examples of the present disclosure, when taken in conjunction with the accompanying drawings.
Figure 1a shows a schematic cross-sectional side view of a pest control device at a first point in time according to some examples.
Figure 1b shows a schematic cross-sectional side view of the pest control device of Figure 1a at a second point in time according to examples.
Figure 2 shows a schematic flow diagram for a method of using a pest control device according to examples.
Figure 3 shows a schematic perspective view of a pest control device according to other examples of the present disclosure.
Figure 4a shows a schematic perspective view of a pest control device at a point in time according to yet other examples of the present disclosure.
Figure 4b shows a schematic perspective view of the pest control device of Figure 4a but from a different viewing direction and at a second point in time.
Figure 4c shows a schematic perspective view of the pest control device of Figures 4a and 4b but at a third point in time.

### Detailed description

The present disclosure will now be described with reference to the accompanying drawings, in which preferred examples of the disclosure are shown. The disclosure may, however, be embodied in other forms and should not be construed as limited to the herein disclosed examples. The disclosed examples are provided to fully convey the scope of the disclosure to the skilled person.

As illustrated in the figures, the sizes of layers and regions are exaggerated for illustrative purposes and, thus, are provided to illustrate the general structures of embodiments of the present invention. Like reference numerals refer to like elements throughout.

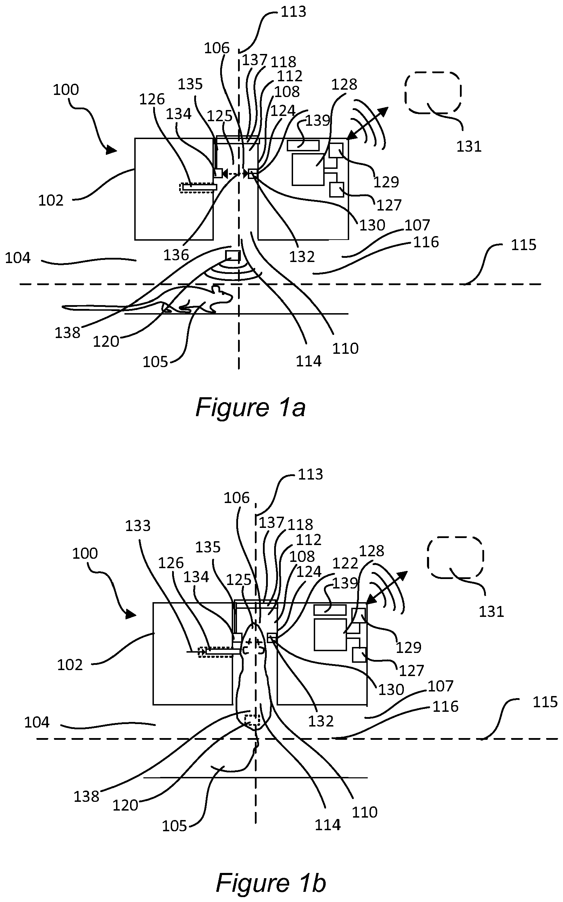

Figure 1a shows a schematic cross-sectional side view of a pest control device at a first point in time according to examples of the present disclosure. Figure 1b shows a schematic cross-sectional side view of the pest control device of Figure 1a at a second point in time according to examples of the present disclosure.

With reference to Figures 1a and 1b, the pest control device 100 comprises a housing 102 arranged to be placed on the ground and lean against an external structure. The housing 102 comprises an entrance 104 for a pest 105. The housing 102 may have another entrance 107. The entrance 104 and the another entrance 107 may allow for a pest to move through the passage 106. The entrance 104 and the another entrance 107 may allow for a pest to see through the passage 106.

The housing 102 has an inner compartment 106, the inner compartment 106 comprising a side wall 108 or side walls extending between a first end 110 and a second end 112. The side wall 108 may by way of example form a cylindrical surface. The inner compartment 106 may alternatively be formed by multiple side walls. The side walls may, by way of example, form a rectangular or hexagonal shape. The inner compartment 106 is elongated and extends between the first end 110 and the second end 112, the extension may be in a longitudinal axis 113.

The first end 110 is an opening 114. The housing 102 further comprises a passage 116. The passage 116 is connecting the entrance 104 to the first end 110 of the inner compartment 106. According to some examples, the another entrance 107 is also connected via the passage 116 to the first end 110. The opening 114 allows pest 105 to enter into the inner compartment 106. The passage 116 may extend along a transversal axis 115. The transversal axis 115 may perpendicular to the longitudinal axis 113.

The housing 102 may comprise an attracting arrangement 118. The attracting arrangement 118 is arranged to attract the pest 105 to the inner compartment 106.

The housing comprises a motion sensor 120. The motion sensor 120 is arranged so as to sense a motion of the pest 105 within the passage 116.

The housing 102 comprises a presence sensor 122 arranged at an inner surface 124 of the inner compartment 106. The presence sensor 122 is arranged to detect presence of the pest 105 within the inner compartment 106.

A killing mechanism 126 is arranged within the inner compartment 106 between the first end 110 and the presence sensor 122.

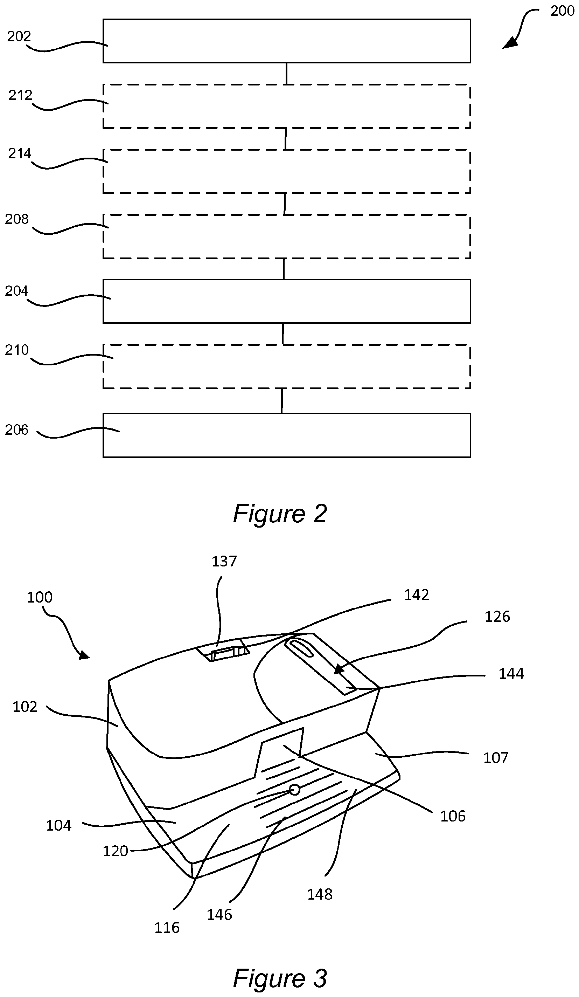

The operation of the pest control device 100 is described in the following in more detail. Figure 2 shows a schematic flow diagram for a method 200 of using a pest control device 100 according to examples of the present disclosure.

With further reference to Figures 1a, 1b and Figure 2, the pest control device 100 further comprises a control circuitry 128. The control circuitry 128 is arranged in the housing 102. The control circuitry 128 is operably connected to the motion sensor 120, the presence sensor 122, and the killing mechanism 126.

In Figure 1a, by way of example, a pest 105, here in the form of a rat, is moving in the passage 116. The motion sensor 120 may be a Passive Infrared sensor, i.e. a PIR sensor. The motion sensor 120 may be arranged to detect the heat, i.e. heat radiation, from the pest 105. In more detail, the motion sensor 120 may be arranged to determine a change in heat radiation. The motion of the pest 105 in the passage 116 may thereby be detected by the motion sensor 120. The motion sensor 120 is illustrated to be arranged in the passage 116 below the opening 114 of the inner compartment 106.

The control circuitry 128 is further configured to cause the pest control device 100 to determine 202 using the motion sensor 120 a movement of the pest within the passage 116 at a movement time point. This is illustrated in Figure 2, in that the method 200 comprises determining 202, by the motion sensor 120 at a movement time point, a movement of the pest 105 within the passage 116.

As discussed above, the presence sensor 122 is arranged at an inner surface 124 of the inner compartment 106. In Figure 1a the pest 105 is not present in the inner compartment 106. Hence, no presence of a pest 105 is detected by the presence sensor 122.

Figure 1b, however, illustrates a situation when the pest 105 has moved into the inner compartment 106 at the second point in time. The pest 105 may have been attracted by the attracting arrangement 118.

The presence sensor 122 may thereby detect presence of the pest 105 within the inner compartment 106. In more detail, the control circuitry 128 is configured to cause the pest control device 100 to determine 204 using the presence sensor 122 a presence of the pest within the inner compartment 106 at a presence time point. The determining 204, by the presence sensor 122 at a presence time point, a presence of the pest 105 within the inner compartment 106 is also illustrated in Figure 2.

The presence sensor 122 may comprise a light source 130 and a light detector 132, wherein light from the light source 130 forms a light path extending across an inner space 125 of the inner compartment 106 formed by the side wall 108 or side walls, and wherein the light detector 132 is arranged to detect light emitted by the light source 130.

The light source 130 may be arranged to emit light in the infrared light range.

The light source 130 may be arranged to emit light in the visible light range.

The light detector 132 may be arranged to detect all or a portion of the light emitted.

Again, with reference to Figures 1b, the control circuitry 128 is arranged to actuate 206 the killing mechanism 126, see the arrow 133, upon the presence time point being within a trigger time range after the movement time point. By way of example, a spring-loaded killing arrangement may be released upon actuation 206 such that a striking element, e.g. a blade, strikes the pest 105. The pest 105 is thereby killed. This actuation 206 is also illustrated in Figure 2 in that the method comprises actuating 206 the killing mechanism 126 upon the presence time point being within a trigger time range after the movement time point.

A more reliable pest detection device 100 may be provided by the actuating being allow if the detecting of a pest is occurring at different points in time by a presence sensor 120 and the motion sensor 122 respectively. To this end, the pest control device 100 is configured to only actuate the killing mechanism 126 upon detection from the two sensors 120,122 occurring within the trigger time range. A time conditioning that the presence time point being within a trigger time range after the movement time point allows for a more accurate actuation of the killing mechanism 126.

With further reference to Figure 2, the control circuitry 128 may be configured to update 208 the movement time point in response to a subsequent movement being determined 202 by the motion sensor 120.

The presence of the pest within the inner compartment 106 may further be determined 204 if the presence of pest is detected 210 for a time period being larger than a threshold detection time. The threshold detection time set the time the presence sensor 122 must detect presence of a pest for the presence sensor 122 and/or to control circuitry 128 to determine a pest presence event.

The threshold detection time may be understood as a time filter set to reject abrupt changes in the light path. By way of example, may the threshold detection time be set to reject a pest presence event if the intensity of the light beam or light beams forming the light path is abruptly changed. According to some examples, particles such as dust particles that may be enter into the inner compartment and temporarily block the light path may be ignored. Insects such as mosquitos or flies that quickly fly thought the light path may be filtered out.

The threshold detection time may be set depending of pest to be detected.

The threshold detection time may be within the time range 50 to 800 milliseconds. Preferably, the threshold detection time is within the time period 150 to 650 milliseconds. The threshold detection time may, according to some examples, be 500 milliseconds. Efficient filtering out of insects passing through the light path may thereby be filtered out while slower moving pest such as a rodent may be detected efficiently.

Again, with reference to Figures 1a and 1b, the pest control device 100 may comprise a memory 127. The pest control device 100 may comprise a data communication device 129. The data communication device 129 may be configured to communicate with another pest control device. The data communication device 129 may also be configured to communicate with a gateway or server 131. The pest control device 100 may comprise a battery 139. The battery 139 may be configured to power the pest control device 100.

The control unit 128 may be in communication with the memory 127. The memory 127 may store data pertaining to the motion time point, the presence time point, and/or the trigger time range. Alternatively, or on combination the gateway or server 131 may comprise a memory. The memory of the gateway or server 131 may store data pertaining to the motion time point, the presence time point, and/or the trigger time range.

The trigger time range may be 5 seconds to 120 seconds.

Preferably, the trigger time range may be between 10 seconds to 80 seconds. More preferably the trigger time range may be between 20 seconds to 40 seconds.

The trigger time range may be larger than 10 seconds.

The control circuitry 128 may be configured to update the movement time point in response to a subsequent movement being determined, as discussed above.

The pest control device 100 may further comprise a mirror 134. The mirror 134 may be arranged to reflect light from the light source 130 to impinge on the light detector 132. A light path 136, illustrated by an arrow, may thereby be formed. The light path 136 may extend back and forth across the inner space 125 of the inner compartment 106, i.e. a space formed by the side wall 108 or side walls. The mirror 134 may be arranged at the opposing side of the inner compartment relative to the light source 130.

It is further illustrated in Figures 1a and 1b that the motion sensor 120 may be arranged on the housing 102, in the passage 116, and in a portion 138 of the passage 116 bordering the first end 110 of the inner compartment 106.

The side wall 108 may be understood as an inner wall. The inner wall may form a cylindrical surface. The cylindrical surface may be understood to border the inner compartment.

The inner compartment 106 may have an inner surface 124 formed by the inner wall or by inner walls.

The inner compartment 106 may have a shape of a prism. The side walls 108 may form the surfaces of the prism. The inner compartment 106 may, by way of example, have a rectangular or hexagonal cross section.

The mirror 134 may be a mirror removably attached to the pest control device 100.

The removable mirror 134 may accessible from the outside of the housing 102. By way of example, the removable mirror 134 may have a mirror holder 135. The mirror holder 135 may be arranged such that it can be reached from the outside of the housing 102. By way of example, the mirror holder 134 may be reached from a hatch 137 arranged on the housing 102. The hatch 137 may comprise the bait discussed above. The hatch 137 may be in the form of a bait box or a drawer arranged to contain the bait. The hatch 137 may be arranged at or adjacent to the second end 112 of the inner compartment 106.

Figure 3 shows a schematic perspective view of a pest control device according to other examples of the present disclosure. The pest control device 100 of Figure 3 is illustrated to have a L-shaped housing 102. The housing 102 may thereby form the passage 116 as described in connection with Figures 1a and 1b.

The L-shaped housing 102 may have two entrances, e.g. an entrance 104 and another entrance 107 allowing a pest to pass through the pest control device. The entrances 104, 107 are exemplified to be opposite each other. The L-shaped housing 102 may be arranged to be placed on the ground and lean against an external structure. To this end, the L-shaped housing 102 may be arranged up against a wall or the like. The ground, wall and an inner portion of the L-shaped housing 102 may thereby form the passage that pest such as a rodent, e.g. a rat or mouse, can move into and/or hide within the passage.

The killing mechanism 126 may comprise a spring-loaded bar, blade or knife that is moved towards the pest when the killing mechanism is actuated. The energy pertaining to a spring being loaded may thereby be transferred to the bar, blade or knife when the killing mechanism 126 is actuated. The killing mechanism 134 may be loaded from the outside of the housing 102 as illustrated by a handle 144 in Figure 3. The killing mechanism 134 may thereby be set in a loaded state, e.g. corresponding to the open state discussed above, from the outside of the housing 102 by use of the handle 144.

The housing 102, e.g. the L-shaped housing 102, may comprise a hatch 137 covering a hatch compartment.

A mirror as described above may be arranged to be removable from the pest control device 100 via the hatch compartment. Hence, by opening the hatch 137 the mirror may be reached from the outside of the housing 102. The mirror may have a mirror holder. The mirror holder may extend to the hatch compartment.

The hatch 137 could be openable and/or removable. The hatch 137 may comprise or be formed by a bait box 142. The bait box 142 may comprise a lure for attracting the pest. Put differently, the attraction arrangement 118 may a bait box 142 arranged in the hatch compartment.

The hatch compartment could comprise the mirror holder 134 with or without a mirror holder 135.

Alternatively, the pest control device may comprise an additional hatch and/or an additional removable compartment for removing or replacing the mirror that are separate from a hatch or compartment described above.

The pest control device 100 may comprise ribs 146 that extend on an inner side 148 of the housing forming a part of the passage 116. The ribs 146 may facilitate the pest's movement into and/or within the inner compartment 106.

The mirror 134 described above may be a planar mirror.

The mirror 134 may be a concave mirror.

The light source may be arranged to emit light having a divergent beam profile. Put differently, the light source may emit light having a beam divergence such that an angular measure of beam diameter or radius increase with distance from the light source. A larger beam may thereby be formed in the space between the light source and the mirror.

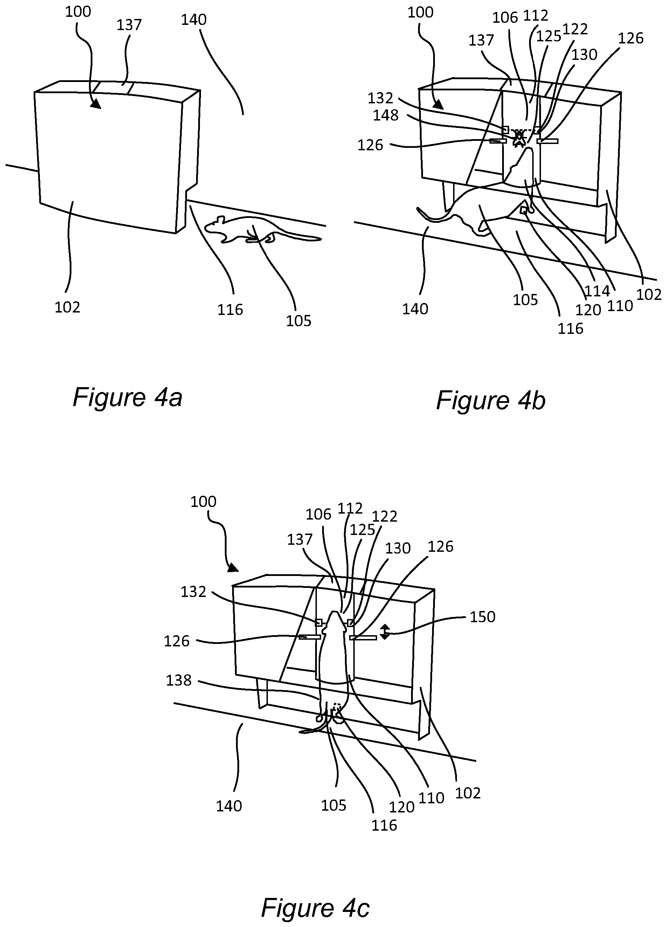

Figure 4a shows a schematic perspective view of a pest control device 100 at a point in time according to yet other examples of the present disclosure. Figure 4b shows a schematic perspective view of the pest control device 100 of Figure 4a but from a different viewing direction and at a second point in time. Figure 4c shows a schematic perspective view of the pest control device of Figures 4a and 4b, but at a third point in time.

With reference to Figures 4a to 4c a presence of pests is discussed. The pest control device 100 may be configured to detect pest 105 within the pest control device 100.

Figure 4a illustrates a pest 105, e.g. a rat moving towards the pest control device 100 at a first point in time. The pest 105 may enter the passage 116 formed by the pest housing 102 of the pest control device 100 and an external wall 140. In more detail, the housing 102 is arranged to lean against an external wall 140 such that the external wall 140 and the housing 102 forms the passage 116 for connecting the entrance 104 to the first end 110 of the inner compartment 106.

Figure 4b illustrates the same pest control device 100 from a different viewing direction. At a second point in time the pest 105 has moved into the passage 116. The second point in time being after the first point in time. The pest 105 may have been attracted into the inner compartment 106 as described above. The pest 105 is in Figure 4b illustrated as having reached to and moved into the opening 114 at the first end 110 of the inner compartment 106. The motion of the pest 104 may be detected by the motion sensor 120. The motion sensor 120 may be a Passive Infrared sensor, i.e. a PIR sensor.

The housing 102 further comprises a presence sensor 122 arranged at an inner surface 124 of the inner compartment 106. The presence sensor 122 is arranged to detect presence of the pest 105 within the inner compartment 106. At this second point in time the pest 105 has not reached the presence sensor 122. This as the presence sensor 122 is arranged at the other side of the killing mechanism 126 as seen from the first end 110 of the inner compartment 106.

The presence sensor 122 is illustrated in Figure 4b as comprising a light source 130 and a light detector 132. According to other examples the presence sensor may comprise a mirror. The light from the light source 130 is illustrated as a dashed line forming a light path extending across an inner space 125 of the inner compartment 106. The light detector 132 is arranged to detect light emitted by the light source 130.

By way of example, an insect 148, e.g. a fly, is illustrated to be present within the inner compartment 106. To filter out fast changes to the intensity of the light beam, e.g. when dust or insects pass through and at least partly blocks the light beam, the control circuitry of the pest control device 100 may be configured to determine the presence of the pest 105 within the inner compartment 106 only if the light path extending across an inner space 125 of the inner compartment 106 is blocked for a time period being larger than a threshold detection time.

Hence, by setting a suitable time value for the threshold detection time the presence of the insect 148 flying through the light beam will not, according to this example, trigger a detection event by the presence sensor 122. Put differently, no false detection of the pest 105 is detected at the second point in time.

In Figure 4c, however, it is exemplified that the pest 105 may reached further into the inner compartment 106 of the housing 102 at a third point in time, the third point in time being after the second point in time. Hence, the pest 105 is detected by the presence sensor 122. Put differently, the pest 105 may at least partly block the light beam from the light source 130.

The duration of the blocking of the light beam may be larger than the threshold detection time. The presence of the pest 105 is thereby detected efficiently. In more detail, the control circuitry of the pest control device may be configured to determine 204 the presence of the pest within the inner compartment 106 if the light path extending across an inner space 125 of the inner compartment 106 is blocked for a time period being larger than a threshold detection time, see Figures 4c and 2.

The presence sensor 122 may be arranged at a predetermined distance from the killing mechanism 126, the predetermined distance 150 being based on the anatomy of the pest 105, see the arrow 150 in Figure 4c. The pest control device 100 of Figures 4a to 4c is exemplified to be arranged to kill rats. An improved selectively may be provided.

It is further illustrated in Figure 4c that the motion sensor 120 may be arranged on the housing 102, in the passage 116, and in a portion 138 of the passage 116 bordering the first end 110 of the inner compartment 106.

With reference to Figure 4c and Figure 2, the control circuitry may be arranged to actuate 206 the killing mechanism 126 upon the presence time point being within a trigger time range after the movement time point. By way of example, a spring-loaded killing arrangement 126 may be released upon actuation 206 such that a striking element, e.g. a blade, strikes the pest 105. The pest 105 is thereby killed. This actuation 206 is also illustrated in Figure 2 in that the method 200 comprises actuating 206 the killing mechanism 126 upon the presence time point being within a trigger time range after the movement time point.

The detecting of a pest 105 at different points in space and time by the presence sensor 120 respectively the motion sensor 122 allows for a more reliable actuation of the killing mechanism 126. By further only actuating 206 the killing mechanism 126 upon detection from the two sensors 102,122 occurring within the trigger range allows for a more reliable pest detection device 100. Thus, the time conditioning that the presence time point being within a trigger time range after the movement time point allows for a more accurate actuation of the killing mechanism 126.

According to some examples, the trigger time range may be 5 seconds to 120 seconds.

According to some examples, the trigger time range may be between 10 seconds to 80 seconds. More preferably, the trigger time range may be between 20 seconds to 40 seconds. The trigger time range may thereby be understood to be a non-zero-time range.

The trigger time range may be larger than 10 seconds.

Returning to Figure 2, it is illustrated that the method 200 may further comprise activating 212 the presence sensor 122 upon the motion sensor 120 determining 202 the movement of a pest. The presence sensor 122 may be activated 212 at the movement time point. The presence sensor 122 may according to other examples be activated after a predetermine period after the movement point in time. The predetermined period may, by way of example, be between 5 seconds and 20 seconds. The predetermined period may be set to a value smaller than the trigger time range.

The method 200 may further comprise performing 214 a test cycle, as described above.

The method 200 may comprise performing 214 the test cycle when the presence sensor 122 is activated 212.

The method 200 may perform the test cycle at a predetermined point in time or at predetermined intervals in time. The test cycle may, by way of example, be performed each hour. The test cycle may be performed each day.

The pest control device 100 of Figures 4a to 4c may comprise an attraction arrangement. The attraction arrangement may be arranged at the second end 112 of inner compartment 106. The second end 112 being opposite to the first end 110. The attraction arrangement may be accessible via a hatch 137. The hatch 137 may be arranged for visual inspection of the inner compartment 106.

The person skilled in the art realizes that the present disclosure is not limited to the preferred embodiments described above. The person skilled in the art further realizes that modifications and variations are possible within the scope of the appended claims. By way of example, the pest control device may comprise: a housing comprising: an entrance for a pest; an inner compartment comprising a side wall, the inner compartment extending between a first end and a second end, wherein the first end comprises an opening; and a passage for connecting the entrance to the first end of the inner compartment; a motion sensor arranged so as to sense a motion of the pest within the passage; a presence sensor arranged at an inner surface of the inner compartment, the presence sensor being arranged to detect presence of the pest within the inner compartment; a killing mechanism arranged within the inner compartment between the first end and the presence sensor; a control circuitry operably connected to the motion sensor, the presence sensor, and the killing mechanism; wherein the control circuitry is configured to cause the pest control device to: determine by the motion sensor a movement of the pest within the passage at a movement time point; determine by the presence sensor a presence of the pest within the inner compartment at a presence time point; and actuate the killing mechanism upon the presence time point being within a trigger time range after the movement time point. Additionally, variations to the disclosed examples can be understood and effected by the skilled person in practicing the claimed disclosure, from a study of the drawings, the disclosure, and the appended claims.

## Claims

1. A pest control device comprising:
a housing (102) arranged to be placed on the ground and lean against an external structure; the housing (102) comprising:
an entrance (104) for a pest (105);
an inner compartment (106) comprising a side wall (108) or side walls extending between a first end (110) and a second end (112), wherein the first end (110) is an opening (114); and a passage (116) for connecting the entrance (104) to the first end (110) of the inner compartment (106);
an attracting arrangement (118) arranged to attract the pest (105) to the inner compartment (106);
a motion sensor (120) arranged so as to sense a motion of the pest (105) within the passage (116);
a presence sensor (122) arranged at an inner surface (124) of the inner compartment (106), the presence sensor (122) being arranged to detect presence of the pest (105) within the inner compartment (106);
a killing mechanism (126) arranged within the inner compartment (106) between the first end (110) and the presence sensor (122);
a control circuitry (128) operably connected to the motion sensor (120), the presence sensor (122), and the killing mechanism (126);
wherein the control circuitry (128) is configured to cause the pest control device (100) to:
determine (202) using the motion sensor (120) a movement of the pest within the passage (116) at a movement time point;
determine (204) using the presence sensor (122) a presence of the pest within the inner compartment (106) at a presence time point; and
actuate (206) the killing mechanism (126) upon the presence time point being within a trigger time range after the movement time point.

2. The pest control device according to claim 1, wherein the trigger time range is 5 seconds to 120 seconds.

3. The pest control device according to claim 1 or 2, wherein the control circuitry (128) is configured to update the movement time point in response to a subsequent movement being determined.

4. The pest control device according to any one of claims 1 to 3, wherein the motion sensor (120) is a Passive Infrared sensor, PIR, sensor.

5. The pest control device according to any one of claims 1 to 4, wherein the presence sensor (122) comprises a light source (130) and a light detector (132), wherein light from the light source (130) forms a light path extending across an inner space of the inner compartment (106) formed by the side wall (108) or side walls, and wherein the light detector (132) is arranged to detect light emitted by the light source (130).

6. The pest control device according to claim 5, wherein the pest control device (100) further comprises a mirror (134) arranged to reflect light from the light source (130) to impinge on the light detector (132) such that a light path (136) extends back and forth across the inner space (124) formed by the side wall (108) or side walls.

7. The pest control device according to claim 6, wherein the mirror (134) is a mirror removably attached to the pest control device (100).

8. The pest control device according to any one of claims 5 to 7, where in the control circuitry (128) is configured to determine (204) the presence of the pest within the inner compartment (106) if the light path extending across an inner space of the inner compartment (106) is blocked for a time period being larger than a threshold detection time.

9. The pest control device according to any one of claims 1 to 8, wherein the presence sensor (122) is arranged at a predetermined distance from the killing mechanism (126), the predetermined distance being based on the anatomy of the pest (105).

10. The pest control device according to any one of claims 1 to 9, wherein the motion sensor (120) is arranged on the housing (102), in the passage (116), and in a portion (138) of the passage (116) bordering the first end (110) of the inner compartment (106).

11. The pest control device according to any one of claims 1 to 10, wherein the housing (102) is arranged to lean against an external wall (140) such that the external wall (140) and the housing (102) forms the passage (116) for connecting the entrance (104) to the first end (110) of the inner compartment (106).

12. The pest control device according to any one of claims 1 to 11, wherein the attraction arrangement (118) is arranged at the second end (112) of inner compartment (106), the second end (112) being opposite to the first end (110).

13. A method for using the pest control device according to any one of claims 1 to 12, the method (200) comprising:
determining (202), by the motion sensor (120) at a movement time point, a movement of the pest (105) within the passage (116);
determining (204), by the presence sensor (122) at a presence time point, a presence of the pest (105) within the inner compartment (106); and
actuating (206) the killing mechanism (126) upon the presence time point being within a trigger time range after the movement time point.

14. The method according to claim 13, wherein the control circuitry (128) is configured to update (208) the movement time point in response to a subsequent movement being determined (202) by the motion sensor (120).

15. The method according to claim 13 or 14, wherein the presence of the pest within the inner compartment (106) is determined (204) if the presence of pest is detected (210) for a time period being larger than a threshold detection time.
